# EUROPEAN PATENT SPECIFICATION

(11) **EP 0 586 395 B1**
(45) Date of publication and mention of the grant of the patent: **11.09.1996**
(21) Application number: 92907938.2
(22) Date of filing: 05.03.1992
(51) Int. Cl.: B01D 37/02, B01J 20/00

(54) **LIQUID FILTRATION AND INCINERATION**
FLÜSSIGKEITSFILTER UND VERBRENNUNG
FILTRATION DE LIQUIDES ET INCINERATION

(30) Priority: 20.05.1991 US 702832
(43) Date of publication of application: 16.03.1994
(73) Proprietor: ENVIROGUARD, INC., Houston Texas 77008 (US)
(72) Inventor: RIEBER, Roy, S., Houston, TX 77042 (US)
(74) Representative: Wilkinson, Stephen John
(86) International application number: US9201724
(87) International publication number: WO9220430

(56) References cited:
- EP-A- 0 261 687
- DE-A- 2 217 038
- DE-A- 3 923 299
- US-A- 3 978 199

## Description

### Field of the Invention

The present invention relates to filter aids or mediums for and methods of filtering liquids in which the resulting filter cake containing filtered solids qualifies as fuel for industrial boilers, furnaces and kilns under federal recycling regulations.

### Background of the Invention

Large quantities of liquids containing unfiltered particles, such as liquid waste, in the past have been discharged in the environment without filtration. Current federal and state regulations limit the discharge of such liquids and liquid wastes into the environment. U.S. Patent No. 4,645,605 is directed to filtration of wastes to separate impurities from liquids or gases with biogenetic silica, such as rice hulls, which provides excellent filtration, but which has little heating value and in normal use does not qualify as fuel for industrial boilers, furnaces and kilns.

A number of filter mediums or filter aids have been proposed which when incinerated yield much less ash than the incineration of a conventional product. Some of these products also increase the heating value of the filter cake to a value greater than 11.6 kJ/kg (5,000 Btu per pound) of filter cake so that the filter cake can qualify as fuel for industrial boilers, furnaces and kilns under federal recycling regulations. These products, however, generally have poor filtration characteristics, are very expensive (1.5 to 2.0 times the cost of conventional filter aids) and yield filter cake which is lower in quality than those from conventional filter aids. It would be highly desirable to provide a filter aid which has very good filtration characteristics, good flow rates, which when incinerated produces a minimum amount of ash, raises the heating value of the filter cake to a value greater than 11.6 kJ/kg (5,000 Btu per pound), and is low cost.

WO 91/05738 discloses a process and device for removing oily impurities from water in which rubber particles are used to absorb the oily impurities.

### Summary of the Invention

The present invention is directed to a method of filtering by which the above properties are obtained; that is, which has excellent filtration, good flow rates, of low cost, qualifies as a fuel for industrial boilers, furnaces and kilns, and which produces a minimum of ash.

The filter aid for filtering solids from liquids and liquid wastes comprises rubber particles having a size effective to filter solid particles from the liquid, alone, or admixed with up to about 70% by weight, and preferably from about 20% to about 70% by weight of silicious particles. The filter aid containing the filtered particles has sufficient heat value so that it can be qualified as a fuel as indicated above. Under current regulations, the resulting filter cake should have a Btu content of at least 11.6 kJ/kg (5000 per pound) of filtered solids to qualify as such a fuel. Preferably, the silicious particles are biogenetic silica, such as rice hull ash, however, other silica particles, such as diatomaceous earth and perlite can be used. Since the rubber particles are hydrophobic in filtering water based liquids, a wetting agent can be added, such as commercial detergents.

The invention also provides the use of the rubber particles as a filter aid for filtering solid particles from a liquid.

The method of the invention comprises flowing the liquid to be filtered through the filter aid which results in a filter cake containing the filtered particles, which filter cake has a Btu content of at least 5000 (11.6 kJ/kg) and, preferably, 6000 (13.9 kJ/kg) or more. The filter cake can then be incinerated as a fuel for an industrial furnace, boiler or kiln. Unexpectedly, by including the rubber particles in the mixture, the filtration flow is increased over that with just the silicious particles.

Accordingly, it is an object of the present invention to provide a method of filtration which has the aforementioned desirable properties.

It is a further object of the present invention to provide the use of a filter aid for filtering liquids and liquid wastes which comprises rubber particles, alone, or admixed with preferably 30% to 75% by weight rubber particles, the rubber particles having up to about 75% by weight of rubber particles, a size effective to filter the solid particles from the liquid and in which the resulting filter cake containing filtered solids has sufficient heating value to qualify the filter cake for incineration as a fuel for industrial boilers, furnaces and kilns under federal recycling regulations.

A further object of the present invention is the provision of a method of filtering liquids and liquid waste, sludges and the like by flowing them through a filter aid comprised of rubber particles having a size effective to filter solid particles from the liquid (preferably in a mesh size range of from about 30 mesh to about 325 mesh), alone, or a mixture of such rubber particles and silicious particles to about 70% silicious particles, and in which the resulting filter cake has a heating value so that the filter cake qualifies as a fuel for industrial boilers, furnaces and kilns under federal recycling regulations.

Other and further objects, features and advantages appear throughout the specification and claims.

### Description of Presently Preferred Embodiments

The present invention is directed to a method of filtering with a filter aid which has good porosity, pore size sufficient to allow the desired material to pass through and prevent the undesirable material from passing through, does not readily compact, does not form a sticky mass, such as clay when wet, is dimensionally stable at the temperature and pressure range that the filtration occurs, and which forms a filter cake containing the filtered out material which produces minimal ash when incinerated and/or increases the heating value of the filter cake so that it will qualify as a fuel under federal recycling regulations. This is accomplished by utilizing a filter aid comprising rubber particles having a size effective to filter the solid particles from the liquid (preferably, from about 0.595 mm (30 mesh) to about 0.044 mm (325 mesh)), alone, or admixed with up to about 70% by weight, and preferably about 20% to about 70% by weight of silicious particles of the filter aid.

The silicious particles can be biogenetic silica, such as rice hull ash or diatomaceous earth or perlite or mixtures thereof.

In utilizing biogenetic silica, plants having a highly porous silica structure are burned which contain a minimum of 15% silica by weight in its dry matter and preferably 20% or more. There are a limited number of such plants that contain these high quantities of silica. Essentially, these are the stalks and hulls of rice, equisetum (horsetail weeds), certain bamboos and palm leaves, particularly polymra, pollen and the like, all of which when burned leave a porous ash that is highly desirable as a filtration aid.

The presently preferred biogenetic silica is rice hull ash. Rice hulls are high in silica content, containing about 18 to 22% by weight, with the ash having a porous skeletal silica structure having approximately 75 to 80% open or void spaces by volume. In addition, it has been a continuing problem for the rice industry to dispose of rice hulls; and, while a number and variety of uses for rice hulls or rice hull ash have been proposed and used, large volumes of rice hulls are burned; and their ash is disposed by the rice industry as a waste material at great expense.

Biogenetic silica in amorphous state and in substantially porous form can be obtained either by burning or decomposition of the hulls.

Commercially available rice hull ash is prepared by burning rice hulls in a furnace. In the process, raw rice hulls are continually added to the top of the furnace and the ash is continuously removed from the bottom. Temperatures in the furnace range from 800° to about 1400°C., and the time factor for the ash in the furnace is about three minutes. Upon leaving the furnace, the ash is rapidly cooled to provide ease in handling. When treated by this method, silica remains in a relatively pure amorphous state rather than the crystalline forms known as tridymite or crystobalite. The transition from the amorphous to the crystalline state generally takes place when the silica is held at very high temperature, for example 2000° C., or longer periods of time. The significance of having the silica in an amorphous state is that the silica ash maintains a porous skeletal structure rather than migrating to form crystals, and the amorphous form of silica does not cause silicosis thus reducing cautionary handling procedures. The burning of the rice hulls is time-temperature related, and burning of these hulls under other conditions can be done so long as the ash is in an amorphous state with a porous skeletal structure.

Biogenetic silica devoid of fiber is fire-retardant, inert, and is dimensionally stable at low and high temperatures, thus rendering it useful at elevated temperatures without structural change.

On a commercial burning of rice hulls as an energy source, the resultant ash had the following range of values in its chemical analysis (by weight):
Silica--92% to 96%
Moisture--less than 1% to 3%
Carbon--3.5% to 7.5%

The remaining 1/2% consists of minor amounts of magnesium, barium, potassium, iron, aluminum, calcium, copper, nickel, sodium, and magnesium.

The carbon content was in a dispersed state throughout the material. The carbon can be activated if the ash is treated with super heated steam under standard conditions. This treatment removes particles that clog the pores of the carbon thus enormously increasing the ability of the carbon to absorb gases.

If desired, of course, the rice hull ash can be burned until all of the carbon is removed. However, in many filtration processes, the presence of the carbon is highly advantageous.

Advantageously, the rubber particles used can be a waste material, such as what is referred to as "buff rubber." This is obtained by grinding of tire carcasses to provide a flat tire surface for a retread and grinding of new tires to finish them. Also, whole tires can be utilized in which the metal and cords are removed, such as by cryogenic processes which are utilized to separate out the metals, such as by a magnet, and the cord.

The rubber component of the mixture may require treatment with a wetting agent in order to defeat hydrophobic characteristics which are frequently found. The wetting agent prevents the rubber component from separating in the filtration stream thereby becoming ineffective, useless and in fact a problem. Many low cost and widely known wetting agents such as industrial soaps and detergents were found to be effective in a wide range of dosages from as little as 1% to as high as 10% and higher. In any event, the wetting agent addition imposed negligible cost to the product and had no deleterious effect on the filtration properties. The wetting agent is unnecessary in other than water based liquids, but can be included, if desired.

As previously mentioned, current governmental recycling regulations require a Btu content of the resulting filter cake of at least 11.6 kJ/kg (5000 Btu per pound) of filter cake. At the present time most recyclers insist on at least 13.9 kJ/kg (6000 Btu's per pound) of filter cake. The incineration is accomplished by using the filter cake as fuel in cement or lime kilns, industrial furnaces, and the like.

As previously mentioned, unexpectedly flowing liquid or liquid wastes through the filter aid exceeded the flow rate experienced with conventional filter aids, the retained solids fraction was equivalent to the retained solids using conventional products, and with refinery sludge retained solids were 40% drier, which is a very desirable quality.

The following examples illustrate the filter aid and method of filtering with the filter aid.

### Example 1

In this example the filter aid was a mixture comprised of 47.5% rice hull ash and 47.5% rubber particles by weight, the rubber particles having a range of from about 30 mesh to about 325 mesh, and a 5.0% wetting agent consisting of a solution of 25% industrial detergent and 75% water by weight. This mixture was obtained by mixing 45.4 kg (100 lbs.) rice hull ash, 45.4 kg (100 pounds) rubber particles and 4.5 kg (10 lb.) detergent solution (total of 95.3 kg (210 lbs.)). This filter aid, identified as mfLA, was compared to three commercial filter aids, which were, Conoco Burnaway, Alar BTU-Plus, and diatomaceous earth as to flow rate (flux), total solids filtered in percent (TS) and the heating value of the resulting filter cake in Btu. The results are set forth in the following Table 1.

**Table 1**

| | x | Flux (*) | | TS (**) | | Heat Value (***) | |
|---|---|---|---|---|---|---|---|
| | | x | mFLA | x | mFLA | x | mFLA |
| Chemical Plant, Silver Recovery | A | 0.91 | 2.04 | 70 | 58 | 10,840 | 7,120 |
| | B | 1.64 | 2.04 | 50 | 58 | 6,180 | 7,120 |
| Refinery, API Sludge | C | 0.10 | 0.12 | 52 | 68 | 1,400 | 6,750 |
| Chemical Plant, Biological Sludge | A | 0.41 | 1.24 | 38 | 50 | 5,540 | 5,010 |
| | B | 0.61 | 1.24 | 46 | 50 | 5,010 | 5,010 |
| Brand x Legend: A = Conoco Burnaway B = Alar BTU-Plus C = Diatomaceous earth | | | | | | | |

| | | | | | | | |
|---|---|---|---|---|---|---|---|
| Notes: (*) Flux: Gallon per minute per square foot of filter area. The bigger the number, the faster the rate of flow through the filter. | | | | | | | |
| (**) TS: Total solids in percent. The larger the number, the drier the filter cake. Bigger is better. | | | | | | | |
| (***) Heating Value = The heating value of the filter cake in Btu per pound. | | | | | | | |

The results in the foregoing table demonstrate that the filter aid of the present invention had increased flow rates through the filter area. Further, the heating value of the filter cake resulting from using the present invention is in all cases above the government mandated 13.9 kJ/kg (6,000 Btu per pound) and in most cases above the heating value of the other filter aids. Lastly, the total solids (TS) of the filter cake are considered a good measure of the effectiveness of the filter aim, are higher for the filter aid of the present invention than for the other media in all cases except one.

### Example 2

In this example the filter aid of the present invention was the same as that in Example 1 except that the silicious particles and the rubber particles varied from about 20% to about 75% by weight of rubber particles. Good filtration and flow rates were obtained and the resulting filter cake containing the filtered material had a heating value in excess of 11.6 kJ/kg (5000 Btu per pound) of filter cake.

### Example 3

In this example, other biogenetic silica particles were substituted for rice hull ash in the preceding examples. These include the ash from stalks and hulls of rice, equisetum, bamboos and palm leaves, which when burned provide pores that are highly desirable as filtration aid. Satisfactory results were obtained by such substitution.

### Example 4

In this example, diatomaceous earth or perlite and mixtures thereof were substituted for the rice hull ash of the preceding examples and each provides satisfactory results. That is, the filtration of solids was obtained, the flow rates were good, and the resulting filter cake containing the filtered solids had sufficient heat value to be incinerated as fuel for industrial boilers, furnaces and kilns.

### Example 5

In this example, the wetting agent was eliminated for non-water based liquids, such as organic liquids in the filter aids of the preceding examples with satisfactory results.

### Example 6

In this example, the filter aid was rubber particles in a range of about 0.595 mm (30 mesh) to about 0.044 mm (325 mesh), alone, and admixed with a wetting agent consisting of a solution of 25% industrial detergent and 75% water by weight. Both of these filter aids were compared to the following commercial filter aids. Alar Btu Plus and diatomaceous earth, Celite Corp., Grade 545. The results are set forth in the following Tables 2A and 2B.

**Table 2A**

| Filter Aid Comparison Filtration of Machine Tool Coolant Oil | | | | |
|---|---|---|---|---|
| | Add Rate* ppm | Flux** gpm/sf | Filt Cake^{#} TS, % | Filt Turb^{##} NTU |
| Crumb Rubber - without wetting agent | 80 | 2.34 | 68 | 0.92 |
| Crumb Rubber with wetting agent | 80 | 2.38 | 67 | 0.89 |
| Alar Btu Plus | 80 | 1.91 | 51 | 11 |
| Diatomaceous Earth, Celite Corp., Grade 545 | 80 | 2.16 | 44 | 0.61 |

| | | | | |
|---|---|---|---|---|
| (*) Add Rate is the amount in parts per million, on a weight basis, of filter aid that is added to the contaminated liquid prior to pumping it to the filter. | | | | |
| (**) Flux is a measure of the rate at which the contaminated liquid treated with the filter aid can be pumped through the filter. Flux is reported in gallons per minute per square foot of filter area (gpm/sf). For example, a filter having two square feet of filter area using an aid of the present invention added at the rate of 80 parts per million can filter the contaminated liquid at the rate of 4.68 gallons per minute. | | | | |
| (#) Filter Cake TS, % is a measure of the dryness of the filter cake at the conclusion of the filtration process. The dryer the filter cake, the larger the TS, the better. | | | | |
| (##) Filtrate Turbidity in NTU or nephlo turbidity units. The smaller the number the less turbid the filtrate, the better. | | | | |

**Table 2B**

| Filter Aid Comparison Filtration of Synthetic Machine Tool Coolant (Water Based) | | | | |
|---|---|---|---|---|
| | Add Rate* ppm | Flux** gpm/sf | Filt Cake^{#} TS, % | Filt Turb^{##} NTU |
| Crumb Rubber - with wetting agent | 50 | 3.16 | 71 | 0.13 |
| Alar Btu Plus | 50 | 1.22 | 43 | 0.64 |
| Diatomaceous Earth, Celite Corp., Grade 545 | 50 | 3.28 | 64 | 0.08 |

| | | | | |
|---|---|---|---|---|
| (*) Add Rate is the amount in parts per million, on a weight basis, of filter aid that is added to the contaminated liquid prior to pumping it to the filter. | | | | |
| (**) Flux is a measure of the rate at which the contaminated liquid treated with the filter aid can be pumped through the filter. Flux is reported in gallons per minute per square foot of filter area (gpm/sf). For example, a filter having two square feet of filter area using an aid of the present invention added at the rate of 80 parts per million can filter the contaminated liquid at the rate of 4.68 gallons per minute. | | | | |
| (#) Filter Cake TS, % is a measure of the dryness of the filter cake at the conclusion of the filtration process. The dryer the filter cake, the larger the TS, the better. | | | | |
| (##) Filtrate Turbidity in NTU or nephlo turbidity units. The smaller the number the less turbid the filtrate, the better. | | | | |

The results of the foregoing Tables 2A and 2B demonstrate the advantages of using crumb rubber alone or admixed with a wetting agent. In all cases, the heating value of the filter cake was about 13.9 kJ/kg (6,000 Btu per pound).

Any desired wetting agent can be used, many of which are commercially available.

## Claims

1. A method of filtering a liquid containing solid particles comprising,
flowing the liquid through a filter aid comprising rubber particles having a size effective to filter solid particles from the liquid,
the resulting filter cake containing the filtered solid particles having a heat value sufficient to be incinerated as a fuel for industrial boilers, furnaces and kilns.

2. A method as claimed in claim 1, wherein the rubber particles have a size of from 0.595mm (30 mesh) to 0.044mm (325 mesh).

3. A method as claimed in claim 1 or claim 2, wherein the filter aid includes a wetting agent.

4. A method as claimed in any one of claims 1 to 3, wherein the filter aid includes up to 75% by weight of silicious particles.

5. A method as claimed in claim 4, wherein the filter aid includes from 20% to 75% by weight of silicious particles.

6. A method as claimed in claim 4 or claim 5, wherein the silicious particles are rice hull ash.

7. A method as claimed in claim 4 or claim 5, wherein the silicious particles are diatomaceous earth.

8. A method as claimed in claim 4 or claim 5, wherein the silicious particles are perlite.

9. The use of rubber particles as a filter aid for filtering a liquid containing solid particles, the rubber particles having a size effective to filter the solid particles from the liquid, the resulting filter cake containing the filtered solid particles having a heat value sufficient to be incinerated as a fuel for industrial boilers, furnaces and kilns.

10. Use as claimed in Claim 9, wherein the rubber particles have a size of from 0.595mm (30 mesh) to 0.044mm (325 mesh).

11. Use as claimed in claim 9 or claim 10, wherein the rubber particles are used together with a wetting agent.

12. Use as claimed in any one of claims 9 to 11, wherein the rubber particles are used in admixture with up to 75% by weight of silicious particles.

13. Use as claimed in claim 12, wherein the rubber particles are used in admixture with from 20% to 75% by weight of silicious particles.

14. Use as claimed in claim 12 or claim 13, wherein the silicious particles are rice hull ash.

15. Use as claimed in claim 12 or claim 13, wherein the silicious particles are diatomaceous earth.

16. Use as claimed in claim 12 or claim 13, wherein the silicious particles are perlite.

## Patentansprüche

1. Verfahren zur Filtration einer feste Teilchen enthaltenden Flüssigkeit, umfassend
Durchfließenlassen der Flüssigkeit durch ein Filtermittel, das Gummiteilchen umfaßt, die eine Größe aufweisen, die wirksam ist, um feste Teilchen von der Flüssigkeit abzufiltrieren,
wobei der resultierende Filterkuchen, der die abfiltrierten festen Teilchen enthält, einen Heizwert besitzt, der ausreicht, um als Brennstoff für industrielle Dampferzeuger, Öfen und Kilns verbrannt zu werden.

2. Verfahren nach Anspruch 1, dadurch gekennzeichnet, daß die Gummiteilchen eine Größe von 0,595 mm (30 mesh) bis 0,044 mm (325 mesh) besitzen.

3. Verfahren nach Anspruch 1 oder 2, dadurch gekennzeichnet, daß das Filtermittel ein Netzmittel enthält.

4. Verfahren nach einem der Ansprüche 1 bis 3, dadurch gekennzeichnet, daß das Filtermittel bis zu 75 Gew.-% Silicatteilchen enthält.

5. Verfahren nach Anspruch 4, dadurch gekennzeichnet, daß das Filtermittel 20 bis 75 Gew.-% Silicatteilchen enthält.

6. Verfahren nach Anspruch 4 oder 5, dadurch gekennzeichnet, daß die Silicatteilchen Reisschalenasche sind.

7. Verfahren nach Anspruch 4 oder Anspruch 5, dadurch gekennzeichnet, daß die Silicatteilchen Diatomeenerde sind.

8. Verfahren nach Anspruch 4 oder 5, dadurch gekennzeichnet, daß die Silicatteilchen Perlit sind.

9. Verwendung von Gummiteilchen als Filtermittel zur Filtration einer feste Teilchen enthaltenden Flüssigkeit, wobei die Kautschukteilchen eine Größe aufweisen, die wirksam ist, um die festen Teilchen von der Flüssigkeit abzufiltrieren, und der die abfiltrierten festen Teilchen enthaltende resultierende Filterkuchen einen Heizwert besitzt, der ausreicht, um als Brennstoff für industrielle Dampferzeuger, Öfen und Kilns verbrannt zu werden.

10. Verwendung nach Anspruch 9, dadurch gekennzeichnet, daß die Gummiteilchen eine Größe von 0,595 mm (30 mesh) bis 0,044 mm (325 mesh) besitzen.

11. Verwendung nach Anspruch 9 oder 10, dadurch gekennzeichnet, daß die Gummiteilchen zusammen mit einem Netzmittel verwendet werden.

12. Verwendung nach einem der Ansprüche 9 bis 11, dadurch gekennzeichnet, daß die Gummiteilchen in Mischung mit bis zu 75 Gew.-% Silicatteilchen verwendet werden.

13. Verwendung nach Anspruch 12, dadurch gekennzeichnet, daß die Gummiteilchen in Mischung mit 20 bis 75 Gew.-% Silicatteilchen verwendet werden.

14. Verwendung nach Anspruch 12 oder 13, dadurch gekennzeichnet, daß die Silicatteilchen Reisschalenasche sind.

15. Verwendung nach Anspruch 12 oder 13, dadurch gekennzeichnet, daß die Silicatteilchen Diatomeenerde sind.

16. Verwendung nach Anspruch 12 oder 13, dadurch gekennzeichnet, daß die Silicatteilchen Perlit sind.

## Revendications

1. Procédé de filtration d'un liquide contenant des particules solides, consistant à
faire circuler le liquide à travers un adjuvant de filtrage comprenant des particules de caoutchouc ayant une taille efficace pour extraire par filtration, du liquide, des particules solides,
un gâteau de filtre résultant qui contient les particules solides extraites par filtration ayant une valeur thermique suffisante pour être incinérées comme combustible pour chaudières, fours et fourneaux industriels.

2. Procédé selon la revendication 1, dans lequel les particules de caoutchouc ont une taille allant de 0,595 mm (30 mesh) à 0,044 mm (325 mesh).

3. Procédé selon la revendication 1 ou la revendication 2, dans lequel l'adjuvant de filtrage comprend un agent mouillant.

4. Procédé selon l'une quelconque des revendications 1 à 3, dans lequel l'adjuvant de filtrage comprend jusqu'à 75 % en poids de particules siliceuses.

5. Procédé selon la revendication 4, dans lequel l'adjuvant de filtrage comprend de 20 à 75 % en poids de particules siliceuses.

6. Procédé selon la revendication 4 ou la revendication 5, dans lequel les particules siliceuses sont constituées de cendre de coques de riz.

7. Procédé selon la revendication 4 ou la revendication 5, dans lequel les particules siliceuses sont constituées de terre de diatomée.

8. Procédé selon le revendication 4 ou la revendication 5, dans lequel les particules siliceuses sont constituées de perlite.

9. Utilisation de particules de caoutchouc comme adjuvant de filtrage pour filtrer un liquide contenant des particules solides, les particules de caoutchouc ayant une taille efficace pour extraire par filtration, du liquide, les particules solides, le gâteau de filtre résultant qui contient les particules solides extraites par filtration ayant une valeur thermique suffisante pour être incinérées comme combustible pour chaudières, fours et fourneaux industriels.

10. Utilisation selon la revendication 9, dans laquelle les particules de caoutchouc ont une taille allant de 0,595 mm (30 mesh) à 0,044 mm (325 mesh).

11. Utilisation selon la revendication 9 ou la revendication 10, dans laquelle les particules de caoutchouc sont utilisées conjointement avec un agent mouillant.

12. Utilisation selon l'une quelconque des revendications 9 à 11, dans laquelle les particules de caoutchouc sont utilisées en mélange avec jusqu'à 75 % en poids de particules siliceuses.

13. Utilisation selon la revendication 12, dans laquelle les particules de caoutchouc sont utilisées en mélange avec de 20 à 75 % en poids de particules siliceuses.

14. Utilisation selon la revendication 12 ou la revendication 13, dans laquelle les particules siliceuses sont constituées de cendre de coques de riz.

15. Utilisation selon la revendication 12 ou la revendication 13, dans laquelle les particules siliceuses sont constituées de terre de diatomée.

16. Utilisation salon la revendication 12 ou la revendication 13, dans laquelle les particules siliceuses sont constituées de perlite.
